# EUROPÄISCHE PATENTSCHRIFT

(11) **EP 4 569 237 B1**
(45) Veröffentlichungstag und Bekanntmachung des Hinweises auf die Patenterteilung: **31.12.2025**
(21) Anmeldenummer: 23751943.4
(22) Anmeldetag: 03.08.2023
(51) Int. Cl.: F16B 12/20

(54) **FEDERKLAMMER SOWIE ANORDNUNG MIT ZWEI MITTELS DER FEDERKLAMMER MITEINANDER VERBUNDENEN PLATTEN**
SPRING CLIP AND ASSEMBLY HAVING TWO PLATES CONNECTED TO EACH OTHER BY MEANS OF THE SPRING CLIP
PINCE À RESSORT ET ENSEMBLE COMPRENANT DEUX PLAQUES RELIÉES L'UNE À L'AUTRE AU MOYEN DE LA PINCE À RESSORT

(30) Priorität: 11.08.2022 DE 202022104575 U
(43) Veröffentlichungstag der Anmeldung: 18.06.2025
(73) Patentinhaber: Häfele Berlin GmbH & Co KG, 12307 Berlin (DE)
(72) Erfinder: LEISTERT, Peer, 15566 Schöneiche (DE); ARNOLD, Lorenz, 6314 Unterägeri (CH)
(74) Vertreter: Kohler Schmid Möbus Patentanwälte
(86) Internationale Anmeldenummer: PCT/EP2023/071494
(87) Internationale Veröffentlichungsnummer: WO 2024/033200

(56) Entgegenhaltungen:
- EP-A1- 1 557 572
- EP-A1- 2 669 208

## Beschreibung

Die Erfindung betrifft eine Federklammer zur Verbindung zweier Platten gemäß Oberbegriff von Anspruch 1 sowie eine Anordnung mit zwei Platten, die mittels der Federklammer miteinander verbunden sind.

Eine solche Federklammer ist beispielsweise aus der EP 2 669 208 A1 bekannt.

Üblicherweise werden ein Möbel- oder Schubkastenboden oder eine Möbelrückwand in eine Nut einer Möbel- oder Schubkastenseitenwand eingesteckt und mittels Wandhaltern mit der Möbelseitenwand verbunden. Die Wandhalter werden beispielsweise samt eingestecktem Boden oder eingesteckter Rückwand mittels einer schräg angesetzten Schraube an der Möbel- oder Schubkastenseitenwand mithilfe eines Werkzeugs festgeschraubt.

Die aus der eingangs genannten EP 2 669 208 A1 bekannte Federklammer dient zum Verbinden zweier plattenartiger Körper, so dass sie zusammen eine rechtwinklige Ecke bilden. Die Federklammer weist zwei Schenkel auf, die federnd miteinander verbunden sind, einen Winkel von weniger als 90° miteinander in einem Ruhezustand der Klemme bilden und in einem Verbindungszustand der plattenartigen Körper sich rund um eine Ecke erstrecken. Jeder Schenkel hat ein äußeres Schenkelende, das von einem Übergang zu dem anderen Schenkel entfernt liegt und einen Körper bildet, der mit einem Teil des plattenartigen Körpers im Verbindungszustand in Eingriff steht. Wenigstens einer der Schenkel ist mit einer Öffnung versehen, die so gestaltet ist, dass sie ein Ende eines langgestreckten Werkzeugkörpers in dem genannten Verbindungszustand der Klemme aufnehmen kann, um das Entfernen der Klemme im Verbindungszustand von den plattenartigen Körpern zu ermöglichen.

Aus der EP 1 557 572 A1 ist eine Klemme für ein Kraftfahrzeug mit einem an einer Kante eines Fahrzeugteils elastisch eingehakten Clip bekannt, der eine mittige Einhaklasche und zwei seitliche Einhaklaschen aufweist, die von einem Schenkel des Clips ausgehen. Jede seitliche Einhaklasche weist einen gefalteten Abschnitt mit einer Hakenplatte auf. Die mittige Einhaklasche weist einen elastischen Haken zum Einhaken der Klemme und des Fahrzeugteils an einem Öffnungsrand auf.

Demgegenüber liegt der vorliegenden Erfindung die Aufgabe zugrunde, ein Befestigungselement zur werkzeuglosen Verbindung zweier Platten anzugeben.

Diese Aufgabe wird erfindungsgemäß durch eine Federklammer in Form eines Winkelprofils mit einem ersten und einem zweiten Profilschenkel gelöst, die miteinander einen Winkel zwischen ca. 80° und 90° einschließen und an ihren einander abgewandten Schenkelenden jeweils eine Abkantung aufweisen, wobei die Abkantungen in Richtung aufeinander zu und jeweils um eine zur Scheitellinie des Winkelprofils parallele Linie abgewinkelt sind und mit ihrem jeweils zugeordneten Profilschenkel einen Winkel zwischen ca. 60° und 90° einschließen und wobei der erste Profilschenkel auf der dem zweiten Profilschenkel abgewandten Seite mindestens eine schräg ausgestellte Lasche aufweist, die an einer zur Scheitellinie parallelen Laschenseite am ersten Profilschenkel angebunden ist und deren freies Laschenende in Richtung fort von der Scheitellinie gerichtet ist.

Erfindungsgemäß lassen sich die beiden Profilschenkel elastisch aufspreizen, wobei die beiden Abkantungen zum Einhaken in eine Nut oder zum Hintergreifen eines Falzes der zu verbindenden Platten dienen. Die mindestens eine Lasche stellt einen Widerhaken dar, der sich in das Plattenmaterial verkrallen kann.

Vorzugsweise ist der erste Profilschenkel länger als der zweite Profilschenkel, insbesondere mindestens doppelt so lang wie der zweite Profilschenkel. In diesem Fall wirkt vor allem der erste Profilschenkel als Feder.

Vorzugsweise beträgt der Winkel zwischen dem ersten und dem zweiten Profilschenkel 90°. Vorzugsweise sind die Winkel der beiden Abkantungen gleich groß und betragen beispielsweise ca. 75°.

In einer Erfindungsvariante ist die mindestens eine Lasche plan ausgebildet und unter einem Winkel zwischen ca. 30° und ca. 60°, bevorzugt ca. 45°, gegenüber dem ersten Profilschenkel schräg ausgestellt, damit sich das freie Laschenende wie ein Widerhaken im Plattenmaterial verkrallen kann.

In einer anderen Erfindungsvariante ist die mindestens eine Lasche gekrümmt ausgebildet, wobei die Verbindungsebene, welche die feste Laschenseite und das freie Laschenende miteinander verbindet, mit dem langen Profilschenkel einen Winkel zwischen ca. 30° und ca. 60°, bevorzugt ca. 45°, einschließt, damit sich das freie Laschenende wie ein Widerhaken im Plattenmaterial verkrallen kann.

Je nach Federklammerbreite kann der erste Profilschenkel eine oder mehrere Laschen aufweisen. Im Fall zweier Laschen können diese an den beiden Längsseiten des ersten Profilschenkels angeordnet sein, wohingegen eine einzige Lasche sich bevorzugt mittig am ersten Profilschenkel befindet.

Vorzugsweise ist die angebundene Laschenseite vom zweiten Profilschenkel mindestens so weit beabstandet, wie die Abkantung des zweiten Profilschenkels über den zweiten Profilschenkel vorsteht.

Die Federklammer kann durch Umformen aus einem Blechzuschnitt hergestellt werden und dabei die Lasche in dem ersten Profilschenkel freigespart sein.

Die Erfindung betrifft auch eine Anordnung aufweisend
- eine erste Platte, insbesondere aus Holzwerkstoff, mit einer stirnseitigen Nut oder Falz und mit einer flächenseitigen Nut oder Falz, wobei die Nuten oder Falze parallel zueinander verlaufen,
- mindestens eine wie oben ausgebildete Federklammer, die eine Eckkante der ersten Platte umgreift und mit der Abkantung des ersten Profilschenkels in die flächenseitige Nut oder Falz und mit der Abkantung des zweiten Profilschenkels in die stirnseitige Nut oder Falz der ersten Platte eingehakt ist, und
- eine zweite Platte, insbesondere aus Holzwerkstoff, mit einer flächenseitigen Nut, deren Nutbreite größer als die Summe aus der Plattendicke der ersten Platte und der Schenkeldicke des ersten Profilschenkels, aber kleiner als die Summe aus der Plattendicke, der Schenkeldicke und dem Überstand der mindestens einen Lasche ist,
wobei die erste Platte samt eingehakter Federklammer stirnseitig in die flächenseitige Nut der zweiten Platte eingesteckt und darin mittels der Federklammer fixiert ist.

Die als Feder wirkende mindestens eine Lasche wird gespannt, und das freie Laschenende verkrallt sich wie ein Widerhaken im Plattenmaterial der zweiten Möbelplatte, wodurch die beiden Möbelplatten mittels der Federklammer miteinander verbunden sind.

Vorzugsweise sind entlang der flächenseitigen Nut der zweiten Platte mehrere Federklammern angeordnet, die jeweils mit der Abkantung ihres ersten Profilschenkels in die flächenseitige Nut oder Falz und mit der Abkantung ihres zweiten Profilschenkels in die stirnseitige Nut oder Falz der ersten Platte eingehakt sind und die das in die flächenseitige Nut der zweiten Platte eingesteckte Ende der ersten Platte darin fixieren.

Weitere Vorteile der Erfindung ergeben sich aus der Beschreibung, den Ansprüchen und der Zeichnung. Ebenso können die vorstehenden genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a, 1b: eine erfindungsgemäße Federklammer in einer perspektivischen Ansicht (Fig. 1a) und in einer Seitenansicht (Fig. 1b);
- Fig. 2: einen Möbelboden mit der erfindungsgemäßen Federklammer;
- Fign. 3a, 3b: die Befestigung des Möbelbodens an einer Seitenwand mittels der erfindungsgemäßen Federklammer in einem vormontierten Zustand (Fig. 3a) und im montierten Zustand (Fig. 3b);
- Fig. 4: eine Detailansicht des Details IV in Fig. 3b;
- Fign. 5a, 5b: eine weitere Ausführungsform der erfindungsgemäßen Federklammer in einer perspektivischen Ansicht (Fig. 5a) und in einer Seitenansicht (Fig. 5b).

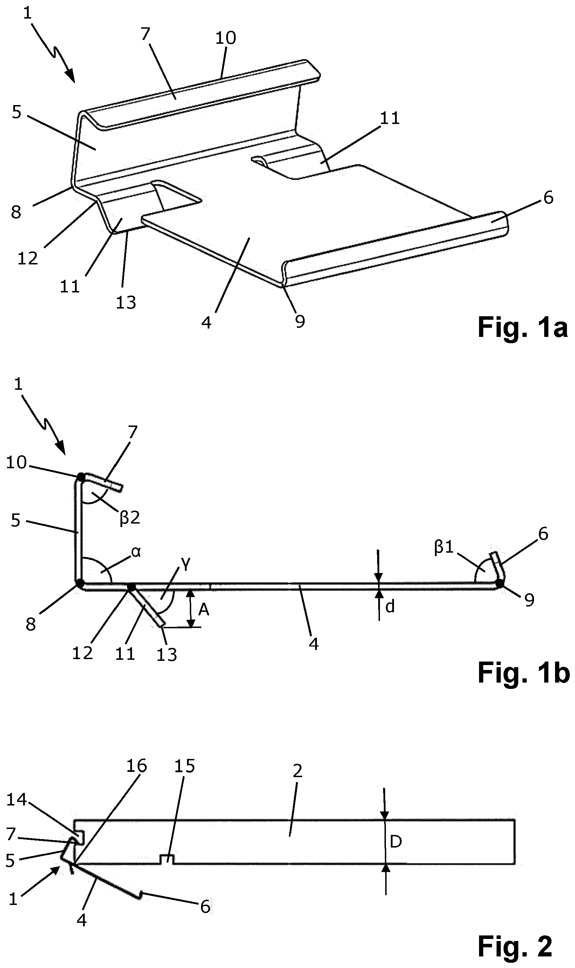

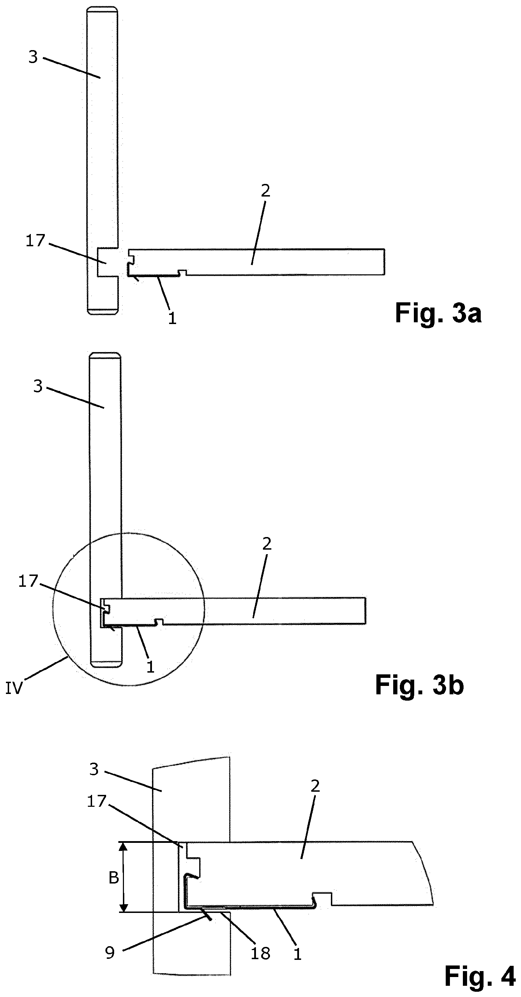

Die in **Fign. 1a, 1b** gezeigte Federklammer **1** dient zur Verbindung zweier Komponenten, hier lediglich beispielhaft zweier Möbelplatten **2,** 3 (Fign. 3a, 3b) aus Holzwerkstoff.

Die Federklammer 1 hat die Form eines Winkelprofils, hier lediglich beispielhaft eines Rechteckprofils, mit einem langen Profilschenkel **4** und einem kurzen Profilschenkel **5,** die miteinander einen Winkel **α** zwischen ca. 80° und 90°, hier 90°, einschließen und an ihren einander abgewandten Schenkelenden jeweils eine Abkantung **6, 7** aufweisen. Der lange Profilschenkel 4 ist bevorzugt mindestens doppelt so lang wie der kurze Profilschenkel 5, hier etwa viermal so lang. Die beiden Abkantungen 6, 7 sind in Richtung aufeinander zu und jeweils um eine zur Scheitellinie **8** des Rechteckprofils parallele Linie **9, 10** abgewinkelt und schließen mit ihrem jeweils zugeordneten Profilschenkel 4, 5 einen Winkel **β1, β2** zwischen ca. 60° und 90° ein, der im gezeigten Ausführungsbeispiel jeweils ca. 75° beträgt.

Auf der dem kurzen Profilschenkel 5 abgewandten Seite weist der lange Profilschenkel 4 an seinen beiden Längsseiten jeweils eine um einen Winkel **γ** zwischen ca. 30° und ca. 60°, hier ca. 45°, schräg ausgestellte, plane Lasche **11** auf. Die beiden Laschen 11 sind jeweils an einer zur Scheitellinie 8 parallelen, festen Laschenseite **12** am langen Profilschenkel 4 angebunden, wobei das der festen Laschenseite 12 gegenüberliegende, freie Laschenende **13** in Richtung fort von der Scheitellinie 8 gerichtet ist. Die feste Laschenseite 12 ist vom kurzen Profilschenkel 5 bevorzugt mindestens so weit beabstandet, wie die Abkantung 7 des kurzen Profilschenkels 5 über den kurzen Profilschenkel 5 vorsteht. Bei sehr dünnen Zargen kann die Beabstandung auch kleiner ausfallen.

Die Federklammer 1 kann aus einem Blechzuschnitt durch Umformen gebildet sein, wobei die Lasche 11 in dem langen Profilschenkel 4 freigespart ist.

Statt der gezeigten zwei äußeren Laschen 11 kann der lange Profilschenkel 4 alternativ auch nur eine einzige, z.B. mittig angeordnete, schräg ausgestellte Lasche 11 oder auch mehr als zwei Laschen 11 aufweisen.

Nachfolgend wird die Verbindung der beiden Möbelplatten 2, 3 beschrieben.

Wie in **Fig. 2** gezeigt, weist die erste Möbelplatte (z.B. horizontale Bodenplatte) 2 eine stirnseitige Nut **14** und eine flächenseitige Nut **15** auf, die beide parallel zu der dazwischenliegenden Rechteckkante **16** der ersten Möbelplatte 2 verlaufen. Die Federklammer 1 umgreift die Rechteckkante 16 und wird mit der Abkantung 7 ihres kurzen Profilschenkels 5 in die stirnseitige Nut 14 eingehakt und mit der Abkantung 6 ihres langen Profilschenkels 4 in die flächenseitige Nut 15 der ersten Möbelplatte 2 eingeclipst, wobei der lange Profilschenkel 4 als Feder wirkt. Anstelle stirn- oder flächenseitiger Nuten 14, 15 kann die erste Möbelplatte 2 auch einen Falz aufweisen, der von den Abkantungen 6, 7 der Federklammer 1 jeweils hintergriffen wird.

Wie in **Fign. 3a** gezeigt, weist die zweite Möbelplatte (z.B. vertikale Seitenwand) 3 eine flächenseitige Nut **17** auf, deren Nutbreite **B** größer als die Summe aus der Plattendicke **D** der ersten Möbelplatte 2 und der Schenkeldicke **d** des langen Profilschenkels 4 ist, aber kleiner als die Summe aus der Plattendicke D, der Schenkeldicke d und dem Überstand **A** der Lasche 11 ist, also: (D + d) < B < (D + d +A).

Wie in **Fig. 3b** gezeigt, wird die erste Möbelplatte 2 samt eingehakter Federklammer 1 stirnseitig in die flächenseitige Nut 17 der zweiten Möbelplatte 3 eingesteckt, wodurch die beiden als Feder wirkenden Laschen 11 gespannt werden und sich die freien Laschenende 13 - wie Widerhaken - in einer der beiden Nutflanken **18** der zweiten Möbelplatte 3, also im Plattenmaterial, verkrallen. Im Ergebnis sind die beiden Möbelplatte 2, 3 mittels der Federklammer 1 miteinander verbunden.

Selbstverständlich können entlang der flächenseitigen Nut 17 der zweiten Möbelplatte 3 auch mehrere Federklammern 1 angeordnet sein, die jeweils mit der Abkantung 6 ihres langen Profilschenkels 4 in die flächenseitige Nut 15 und mit der Abkantung 7 ihres kurzen Profilschenkels 5 in die stirnseitige Nut 14 der ersten Möbelplatte 2 eingehakt sind und die das in die flächenseitige Nut 17 der zweiten Platte 3 eingesteckte Ende der ersten Möbelplatte 2 darin fixieren.

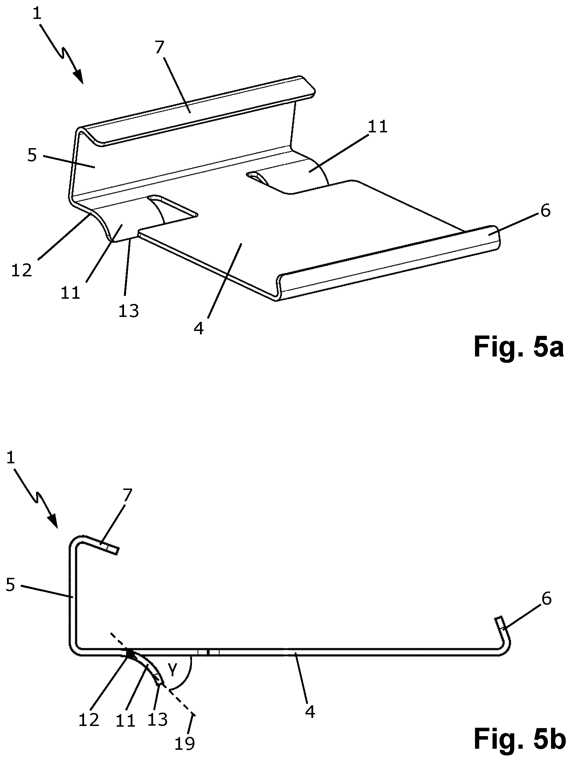

Von der Federklammer 1 der Fig. 1 unterscheidet sich die in **Fign. 5a, 5b** gezeigte Federklammer 1 dadurch, dass hier zur besseren Montage die Laschen 11 nicht plan, sondern hin zum langen Profilschenkel 4 gekrümmt sind. Alternativ können die Laschen 11 aber auch fort vom langen Profilschenkel 4 gekrümmt sein. In beiden Fällen schließt die Verbindungsebene **19,** welche die feste Laschenseite 12 und das freie Laschenende 13 miteinander verbindet, mit dem langen Profilschenkel 4 einen Winkel γ zwischen ca. 30° und ca. 60°, hier ca. 45°, ein, damit sich die freien Laschenenden 13 - wie Widerhaken - im Plattenmaterial verkrallen können.

## Patentansprüche

1. Federklammer (1) zur Verbindung zweier Platten (2, 3) in Form eines Winkelprofils mit einem ersten und einem zweiten Profilschenkel (4, 5), die miteinander einen Winkel (α) zwischen ca. 80° und 90° einschließen und an ihren einander abgewandten Schenkelenden jeweils eine Abkantung (6, 7) aufweisen,
wobei die Abkantungen (6, 7) in Richtung aufeinander zu und jeweils um eine zur Scheitellinie (8) des Winkelprofils parallele Linie (9, 10) abgewinkelt sind und mit ihrem jeweils zugeordneten Profilschenkel (4, 5) einen Winkel (β1, β2) zwischen ca. 60° und 90° einschließen, und
wobei der erste Profilschenkel (4) auf der dem zweiten Profilschenkel (5) abgewandten Seite mindestens eine schräg ausgestellte Lasche (11) aufweist, die an einer zur Scheitellinie (8) parallelen, festen Laschenseite (12) am ersten Profilschenkel (4) angebunden ist,
**dadurch gekennzeichnet,**
**dass** ein freies Laschenende (13) der Lasche (11) in Richtung fort von der Scheitellinie (8) gerichtet ist.

2. Federklammer nach Anspruch 1, **dadurch gekennzeichnet, dass** die Lasche (11) einen Widerhaken zum Verkrallen in ein Plattenmaterial einer der Platten (2, 3) darstellt.

3. Federklammer nach Anspruch 1 oder 2, **dadurch gekennzeichnet, dass** der erste Profilschenkel (4) länger als der zweite Profilschenkel (5) ist, insbesondere mindestens doppelt so lang wie der zweite Profilschenkel (5) ist.

4. Federklammer nach einem der vorhergehenden Ansprüche, **dadurch gekennzeichnet, dass** der Winkel (α) zwischen dem ersten und dem zweiten Profilschenkel (4, 5) 90° beträgt.

5. Federklammer nach einem der vorhergehenden Ansprüche, **dadurch gekennzeichnet, dass** die Winkel (β1, β2) der beiden Abkantungen (6, 7) gleich groß sind.

6. Federklammer nach einem der vorhergehenden Ansprüche, **dadurch gekennzeichnet, dass** die Winkel (β1, β2) der beiden Abkantungen (6, 7) ca. 75° betragen.

7. Federklammer nach einem der vorhergehenden Ansprüche, **dadurch gekennzeichnet, dass** die mindestens eine Lasche (11) plan ausgebildet und unter einem Winkel (γ) zwischen ca. 30° und ca. 60°, bevorzugt ca. 45°, gegenüber dem ersten Profilschenkel (4) schräg ausgestellt ist.

8. Federklammer nach einem der Ansprüche 1 bis 6, **dadurch gekennzeichnet, dass** die mindestens eine Lasche (11) gekrümmt ausgebildet ist, wobei die Verbindungsebene (19), welche die feste Laschenseite (12) und das freie Laschenende (13) miteinander verbindet, mit dem langen Profilschenkel (4) einen Winkel (γ) zwischen ca. 30° und ca. 60°, bevorzugt ca. 45°, einschließt.

9. Federklammer nach einem der vorhergehenden Ansprüche, **dadurch gekennzeichnet, dass** der erste Profilschenkel (4) an seinen beiden Längsseiten jeweils eine schräg ausgestellte Lasche (11) aufweist.

10. Federklammer nach einem der vorhergehenden Ansprüche, **dadurch gekennzeichnet, dass** der erste Profilschenkel (4) eine mittig angeordnete, schräg ausgestellte Lasche (11) aufweist.

11. Federklammer nach einem der vorhergehenden Ansprüche, **dadurch gekennzeichnet, dass** die feste Laschenseite (12) vom zweiten Profilschenkel (5) mindestens so weit beabstandet ist, wie die Abkantung (7) des zweiten Profilschenkels (5) über den zweiten Profilschenkel (5) vorsteht.

12. Federklammer nach einem der vorhergehenden Ansprüche, **dadurch gekennzeichnet, dass** die mindestens eine Lasche (11) in dem ersten Profilschenkel (4) freigespart ist.

13. Anordnung aufweisend
eine erste Platte (2), insbesondere aus Holzwerkstoff, mit einer stirnseitigen Nut oder Falz (14) und mit einer flächenseitigen Nut oder Falz (15), wobei die Nuten oder Falze (14, 15) parallel zueinander verlaufen,
mindestens eine Federklammer (1) nach einem der vorhergehenden Ansprüche, die eine Eckkante (16) der ersten Platte (2) umgreift und mit der Abkantung (6) des ersten Profilschenkels (4) in die flächenseitige Nut oder Falz (15) und mit der Abkantung (7) des zweiten Profilschenkels (5) in die stirnseitige Nut oder Falz (14) der ersten Platte (2) eingehakt ist, und
eine zweite Platte (3), insbesondere aus Holzwerkstoff, mit einer flächenseitigen Nut (17), deren Nutbreite (B) größer als die Summe aus der Plattendicke (D) der ersten Platte (2) und der Schenkeldicke (d) des ersten Profilschenkels (4) und kleiner als die Summe aus der Plattendicke (D), der Schenkeldicke (d) und dem Überstand (A) der mindestens einen Lasche (11) ist, wobei die erste Platte (2) samt eingehakter Federklammer (1) stirnseitig in die flächenseitige Nut (17) der zweiten Platte (3) eingesteckt und darin mittels der Federklammer (1) fixiert ist.

14. Anordnung nach Anspruch 13, **dadurch gekennzeichnet, dass** das freie Laschenende (13) der mindestens einen Lasche (11) in eine der beiden Nutflanken (18) der zweiten Platte (3) verkrallt ist.

15. Anordnung nach Anspruch 13 oder 14, **gekennzeichnet durch** mehrere entlang der flächenseitigen Nut (17) der zweiten Platte (3) angeordnete Federklammern (1), die jeweils mit der Abkantung (6) ihres ersten Profilschenkels (4) in die flächenseitige Nut oder Falz (15) und mit der Abkantung (7) ihres zweiten Profilschenkels (5) in die stirnseitige Nut oder Falz (14) der ersten Platte (2) eingehakt sind und die das in die flächenseitige Nut (17) der zweiten Platte (3) eingesteckte Ende der ersten Platte (2) darin fixieren.

## Claims

1. Spring clip (1) for connecting two plates (2, 3) in the form of an angle profile with a first and a second profile leg (4, 5), which form an angle (α) of between approximately 80° and 90° with each other and have an angled section (6, 7) at each of their opposite leg ends,
wherein the angled sections (6, 7) are angled toward each other and are also angled in each case around a line (9, 10) parallel to the apex line (8) of the angle profile and enclose an angle (β1, β2) of between approximately 60° and 90° with their respectively associated profile leg (4, 5), and
wherein the first profile leg (4) on the side facing away from the second profile leg (5) has at least one slanted-out tab (11) which is fixed to the first profile leg (4) on a fixed tab side (12) parallel to the apex line (8),
**characterized in that** a free tab end (13) of the tab (11) is directed away from the apex line (8).

2. Spring clip according to claim 1, **characterized in that** the tab (11) forms a barb for clawing into a plate material of one of the plates (2, 3).

3. Spring clip according to claim 1 or 2, **characterized in that** the first profile leg (4) is longer than the second profile leg (5), in particular at least twice as long as the second profile leg (5).

4. Spring clip according to one of the preceding claims, **characterized in that** the angle (α) between the first and the second profile leg (4, 5) is 90°.

5. Spring clip according to one of the preceding claims, **characterized in that** the angles (β1, β2) of the two angled sections (6, 7) are equal in size.

6. Spring clip according to one of the preceding claims, **characterized in that** the angles (β1, β2) of the two angled sections (6, 7) are approximately 75°.

7. Spring clip according to one of the preceding claims, **characterized in that** the at least one tab (11) is flat and slants out with respect to the first profile leg (4) at an angle (γ) of between approximately 30° and approximately 60°, preferably approximately 45°.

8. Spring clip according to one of the claims 1 to 6, **characterized in that** the at least one tab (11) is curved, wherein the connection plane (19), which connects the fixed tab side (12) and the free tab end (13) to each other, encloses an angle (γ) of between approximately 30° and approximately 60°, preferably approximately 45°, with the long profile leg (4).

9. Spring clip according to one of the preceding claims, **characterized in that** the first profile leg (4) has a slanted-out tab (11) on each of its two longitudinal sides.

10. Spring clip according to one of the preceding claims, **characterized in that** the first profile leg (4) has a centrally arranged, slanted-out tab (11).

11. Spring clip according to one of the preceding claims, **characterized in that** the fixed tab side (12) is spaced apart from the second profile leg (5) at least as far as the angled section (7) of the second profile leg (5) protrudes beyond the second profile leg (5).

12. Spring clip according to one of the preceding claims, **characterized in that** the at least one tab (11) is left free in the first profile leg (4).

13. Arrangement comprising
a first plate (2), in particular made of wood-based material, with a front-side groove or fold (14) and with a surface-side groove or fold (15), wherein the grooves or folds (14, 15) extend parallel to each other,
at least one spring clip (1) according to one of the preceding claims, which engages around a corner edge (16) of the first plate (2) and is hooked with the angled section (6) of the first profile leg (4) into the surface-side groove or fold (15) and is hooked with the angled section (7) of the second profile leg (5) into the front-side groove or fold (14) of the first plate (2), and
a second plate (3), in particular made of wood-based material, with a surface-side groove (17), the groove width (B) of which is greater than the sum of the plate thickness (D) of the first plate (2) and the leg thickness (d) of the first profile leg (4) and smaller than the sum of the plate thickness (D), the leg thickness (d) and the projection (A) of the at least one tab (11), wherein the first plate (2) together with the hooked spring clip (1) is inserted at the front side into the surface-side groove (17) of the second plate (3) and is fixed therein by means of the spring clip (1).

14. Arrangement according to claim 13, **characterized in that** the free tab end (13) of the at least one tab (11) is clawed into one of the two groove flanks (18) of the second plate (3).

15. Arrangement according to claim 13 or 14, **characterized by** several spring clips (1) which are arranged along the surface-side groove (17) of the second plate (3), wherein the angled section (6) of their first profile leg (4) is hooked into the surface-side groove or fold (15) and the angled section (7) of their second profile leg (5) is hooked into the front-side groove or fold (14) of the first plate (2), the spring clips fixing the end of the first plate (2), which is inserted into the surface-side groove (17) of the second plate (3) in the surface-side groove.

## Revendications

1. Attache élastique (1) conçue pour relier deux panneaux (2, 3), revêtant la forme d'un profilé en équerre comprenant des première et seconde ailes profilées (4, 5) qui décrivent mutuellement un angle (α) compris entre environ 80° et 90°, et sont respectivement dotées d'une région coudée (6, 7) à leurs extrémités pointant à l'opposé l'une de l'autre,
sachant que les régions coudées (6, 7) sont cambrées en direction l'une de l'autre, autour d'une ligne respective (9, 10) parallèle à la ligne sommitale (8) du profilé en équerre, et décrivent un angle (β1, β2) compris entre environ 60° et 90° par leur aile profilée (4, 5) respectivement associée, et
sachant que la première aile profilée (4) est munie, du côté pointant à l'opposé de la seconde aile profilée (5), d'au moins une languette (11) orientée à l'oblique et rattachée à ladite première aile profilée (4) au niveau d'un côté fixe (12) de ladite languette parallèle à ladite ligne sommitale (8), **caractérisée par le fait qu'**une extrémité libre (13) de la languette pointe dans une direction l'éloignant de la ligne sommitale (8).

2. Attache élastique selon la revendication 1, **caractérisée par le fait que** la languette (11) se présente comme un ardillon destiné à s'incruster dans un matériau de l'un des panneaux (2, 3).

3. Attache élastique selon la revendication 1 ou 2, **caractérisée par le fait que** la première aile profilée (4) est plus longue que la seconde aile profilée (5), en particulier au moins deux fois plus longue que ladite seconde aile profilée (5).

4. Attache élastique selon l'une des revendications précédentes, **caractérisée par le fait que** l'angle (α), entre les première et seconde ailes profilées (4, 5), mesure 90°.

5. Attache élastique selon l'une des revendications précédentes, **caractérisée par le fait que** les angles (β1, β2) des deux régions coudées (6, 7) sont de même dimensionnement.

6. Attache élastique selon l'une des revendications précédentes, **caractérisée par le fait que** les angles (β1, β2) des deux régions coudées (6, 7) mesurent environ 75°.

7. Attache élastique selon l'une des revendications précédentes, **caractérisée par le fait que** la languette (11) à présence minimale est de réalisation plane et est orientée à l'oblique, par rapport à la première aile profilée (4), d'un angle (γ) compris entre environ 30° et environ 60°, et mesurant environ 45° de préférence.

8. Attache élastique selon l'une des revendications 1 à 6, **caractérisée par le fait que** la languette (11) à présence minimale est de réalisation curviligne, sachant que le plan de liaison (19) reliant mutuellement le côté fixe (12) de la languette et l'extrémité libre (13) de ladite languette décrit, avec l'aile profilée (4) longue, un angle (γ) compris entre environ 30° et environ 60°, et mesurant environ 45° de préférence.

9. Attache élastique selon l'une des revendications précédentes, **caractérisée par le fait que** la première aile profilée (4) est pourvue, au niveau de ses deux côtés longitudinaux, d'une languette respective (11) orientée à l'oblique.

10. Attache élastique selon l'une des revendications précédentes, **caractérisée par le fait que** la première aile profilée (4) est dotée d'une languette (11) disposée centralement et orientée à l'oblique.

11. Attache élastique selon l'une des revendications précédentes, **caractérisée par le fait que** le côté fixe (12) de la languette est espacé, de la seconde aile profilée (5), d'une distance au moins égale à celle dont la région coudée (7) de la seconde aile profilée (5) fait saillie au-delà de ladite seconde aile profilée (5).

12. Attache élastique selon l'une des revendications précédentes, **caractérisée par le fait que** la languette (11), à présence minimale, est ouvragée dans la première aile profilée (4).

13. Agencement comprenant
un premier panneau (2) consistant notamment en du bois, comportant une rainure ou une feuillure (14) située côté face extrême, et une rainure ou une feuillure (15) située côté face plane, lesdites rainures ou feuillures (14, 15) s'étendant parallèlement l'une à l'autre,
au moins une attache élastique (1) conforme à l'une des revendications précédentes, qui ceinture une arête d'angle (16) du premier panneau (2) et est accrochée, par la région coudée (6) de la première aile profilée (4), dans la rainure ou la feuillure (15) située côté face plane et, par la région coudée (7) de la seconde aile profilée (5), dans la rainure ou la feuillure (14) située côté face extrême dudit premier panneau (2), et
un second panneau (3) consistant notamment en du bois, pourvu d'une rainure (17) qui est située côté face plane et dont la largeur (B) est supérieure à la somme de l'épaisseur (D) du premier panneau (2) et de l'épaisseur (d) de la première aile profilée (4), et inférieure à la somme de ladite épaisseur (D) du panneau, de ladite épaisseur (d) de l'aile, et de la distance (A) dont la languette (11) à présence minimale fait saillie, étant précisé que ledit premier panneau (2) est emboîté frontalement dans la rainure (17) située côté face plane dudit second panneau (3), conjointement à l'attache élastique (1) accrochée, et est consigné à demeure dans ladite rainure au moyen de ladite attache élastique (1).

14. Agencement selon la revendication 13, **caractérisé par le fait que** l'extrémité libre (13) de la languette (11) à présence minimale est incrustée dans l'un des deux flancs (18) de la rainure du second panneau (3).

15. Agencement selon la revendication 13 ou 14, **caractérisé par** plusieurs attaches élastiques (1) qui sont disposées le long de la rainure (17) située côté face plane du second panneau (3), sont respectivement accrochées, par la région coudée (6) de leur première aile profilée (4), dans la rainure ou la feuillure (15) située côté face plane et, par la région coudée (7) de leur seconde aile profilée (5), dans la rainure ou la feuillure (14) située côté face extrême du premier panneau (2), et par lesquelles l'extrémité dudit premier panneau (2), emboîtée dans ladite rainure (17) située côté face plane dudit second panneau (3), est consignée à demeure dans ladite rainure.
